(19) Europäisches Patentamt / European Patent Office / Office européen des brevets

(11) **EP 4 261 948 B1**

(12) **EUROPEAN PATENT SPECIFICATION**

(45) Date of publication and mention
of the grant of the patent:
**04.03.2026 Bulletin 2026/10**

(21) Application number: **22887748.6**

(22) Date of filing: **31.10.2022**

(51) International Patent Classification (IPC):
$H01M\ 4/36^{(2006.01)}$    $H01M\ 4/38^{(2006.01)}$
$H01M\ 4/62^{(2006.01)}$    $H01M\ 4/13^{(2010.01)}$
$H01M\ 10/052^{(2010.01)}$    $H01M\ 10/0569^{(2010.01)}$
$H01M\ 4/02^{(2006.01)}$

(52) Cooperative Patent Classification (CPC):
**H01M 4/13; H01M 4/362; H01M 4/366; H01M 4/38;**
**H01M 4/625; H01M 10/052; H01M 10/0569;**
H01M 2004/028; Y02E 60/10

(86) International application number:
**PCT/KR2022/016848**

(87) International publication number:
**WO 2023/075554 (04.05.2023 Gazette 2023/18)**

(54) **POSITIVE ELECTRODE INCLUDING SULFUR-CARBON COMPOSITE AND LITHIUM-ION SECONDARY BATTERY INCLUDING THE SAME**

POSITIVELEKTRODE MIT SCHWEFEL-KOHLENSTOFF-VERBUNDSTOFF UND LITHIUM-IONEN-SEKUNDÄRBATTERIE DAMIT

ÉLECTRODE POSITIVE COMPRENANT UN COMPOSITE SOUFRE-CARBONE ET BATTERIE SECONDAIRE AU LITHIUM-ION COMPRENANT CELLE-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.10.2021 KR 20210147385**

(43) Date of publication of application:
**18.10.2023 Bulletin 2023/42**

(73) Proprietor: **LG Energy Solution, Ltd.**
**Seoul 07335 (KR)**

(72) Inventors:
• **PARK, In-Tae**
**Daejeon 34122 (KR)**
• **KIM, Yong-Hwi**
**Daejeon 34122 (KR)**
• **PARK, Seong-Hyo**
**Daejeon 34122 (KR)**
• **SONG, Myeong-Jun**
**Daejeon 34122 (KR)**
• **LEE, Hyun-Soo**
**Daejeon 34122 (KR)**
• **CHOI, Ran**
**Daejeon 34122 (KR)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
CN-A- 106 159 221    KR-A- 20120 051 549
KR-A- 20190 060 262    KR-A- 20200 030 218
KR-A- 20200 030 218    KR-A- 20200 060 258
KR-A- 20210 032 637    KR-A- 20210 032 637

**Description**

TECHNICAL FIELD

The present disclosure relates to a lithium-ion secondary battery having high energy density and inhibited from elution of polysulfide, resulting in improvement of low initial irreversibility characteristics, and a positive electrode for the battery.

The present application claims priority to Korean Patent Application No. 10-2021-0147385 filed on October 29, 2021 in the Republic of Korea.

BACKGROUND ART

A lithium-sulfur (Li-S) battery using a conventional catholyte system is problematic in that it depends on a catholyte type reaction through the formation of polysulfide as an intermediate product in the form of $Li_2S_x$, and thus cannot utilize a high theoretical discharge capacity (1675 mAh/g) of sulfur (S) sufficiently and causes degradation of battery life characteristics due to the elution of polysulfide.

Recently, a sparingly solvating electrolyte (SSE) system inhibiting the elution of polysulfide has been developed. Thus, it has been determined that application of a carbonaceous material having a high specific surface area of larger than 1,500 $m^2$/g allows a utilization of 90% or more based on the theoretical capacity. However, there is a need for improving low life characteristics and output characteristics.

Under these circumstances, there is a need for an electrolyte and positive electrode active material system capable of being operated even at 4.0 mAh/cm$^2$ or more and a porosity of 60 vol% or less in order to realize a battery system having a high energy density of 400 Wh/kg or more and 600 Wh/L or more. Documents KR20200060258A, KR20200030218A, and KR20210032637A disclose positive electrodes for lithium-sulfur secondary batteries that represent relevant prior art to the present disclosure.

DISCLOSURE

Technical Problem

The present disclosure is designed to solve the problems of the related art, and therefore the present disclosure is directed to providing a positive electrode active material for a battery system having a high energy density of 400 Wh/kg or more and 600 Wh/L or more.

The present disclosure is also directed to providing a lithium-ion secondary battery including the positive electrode active material.

Also, it will be easily understood that these and other objects and advantages of the present disclosure may be realized by the means shown in the appended claims and combinations thereof.

Technical Solution

The subject matter of the present invention is defined in the appended claims.

According to the first embodiment of the present disclosure, there is provided a positive electrode for a lithium-sulfur battery, which includes a positive electrode active material including a sulfur-carbon composite, wherein the sulfur-carbon composite includes a porous carbonaceous material and sulfur, and the carbonaceous material has a specific surface area (BET) of larger than 1,600 $m^2$/g and a particle diameter ($D_{50}$) of primary particles of equal to or larger than 500 nm and less than 8 $\mu$m.

According to the second embodiment of the present disclosure, there is provided the positive electrode for a lithium-sulfur battery as defined in the first embodiment, wherein the carbonaceous material has particle diameter ($D_{50}$) of primary particles of equal to or larger than 1 $\mu$m and less than 8 $\mu$m.

According to the third embodiment of the present disclosure, there is provided the positive electrode for a lithium-sulfur battery as defined in the first or the second embodiment, wherein the carbonaceous material has a BET specific surface area of primary particles of 2,000 $m^2$/g or more.

According to the fourth embodiment of the present disclosure, there is provided the positive electrode for a lithium-sulfur battery as defined in any one of the first to the third embodiments, wherein the carbonaceous material has a ratio of pores having a diameter of less than 3 nm of 40 vol% or more based on 100 vol% of the total pores.

According to the fifth embodiment of the present disclosure, there is provided the positive electrode for a lithium-sulfur battery as defined in any one of the first to the fourth embodiments, wherein the carbonaceous material has a Span value of 2.0 or less, as determined by the following Formula 1:

Span = (Particle diameter ($D_{90}$) of primary particles - Particle diameter ($D_{10}$) of primary particles) / Particle diameter ($D_{50}$) of primary particles    [Formula 1]

According to the sixth embodiment of the present disclosure, there is provided the positive electrode for a lithium-sulfur battery as defined in any one of the first to the fifth embodiments, wherein the sulfur-carbon composite has a SCP value of larger than 0.85, as defined by the following Formula 2:

[Formula 2]

$$SCP = \text{Sulfur content ratio (A)} \div \text{Pore volume ratio of carbonaceous material (B)}$$

In Formula 2, A represents a ratio of the weight of sulfur based on the weight of the carbon-sulfur composite, and B represents a ratio of pore volume in the carbonaceous material based on the total volume (apparent volume) of the carbonaceous material.

According to the seventh embodiment of the present disclosure, there is provided the positive electrode for a lithium-sulfur battery as defined in any one of the first to the sixth embodiments, wherein the carbonaceous material includes activated carbon in an amount of 95 wt% or more based on 100 wt% of the carbonaceous material.

According to the eighth embodiment of the present disclosure, there is provided the positive electrode for a lithium-sulfur battery as defined in any one of the first to the seventh embodiments, wherein the positive electrode active material includes the sulfur-carbon composite in an amount of 70 wt% or more based on 100 wt% of the positive electrode active material.

According to the ninth embodiment of the present disclosure, there is provided the positive electrode for a lithium-sulfur battery as defined in any one of the first to the eighth embodiments, wherein the sulfur-carbon composite is at least one of a composite formed through simple mixing of sulfur with the carbonaceous material, a coated composite having a core-shell structure, and a composite including sulfur packed in the internal pores of the carbonaceous material.

According to the tenth embodiment of the present disclosure, there is provided the positive electrode for a lithium-sulfur battery as defined in any one of the first to the ninth embodiments, wherein the positive electrode active material further includes a binder resin and a conductive material.

According to the eleventh embodiment of the present disclosure, there is provided a lithium-sulfur battery including a positive electrode, a negative electrode, a separator interposed between the positive electrode and the negative electrode, and an electrolyte, wherein the electrolyte includes at least one selected from a cyclic ether, a linear ether and a fluorinated ether, and the positive electrode is the same as defined in any one of the first to the tenth embodiments.

<u>Advantageous Effects</u>

The lithium-sulfur battery using the sulfur-carbon composite according to the present disclosure shows a reduced initial irreversible capacity and provides improved output characteristics and life characteristics.

<u>BEST MODE</u>

Hereinafter, preferred embodiments of the present disclosure will be described in detail.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes or has an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

In addition, throughout the specification, the expression 'a part includes an element' does not preclude the presence of any additional elements but means that the part may further include the other elements, unless otherwise stated.

As used herein, 'specific surface area' is determined by the BET method, and particularly, may be calculated from the nitrogen gas adsorption under a liquid nitrogen temperature (77K) by using BELSORP-mino II available from BEL Japan Co.

The term 'polysulfide' used herein has a concept covering both 'polysulfide ion ($S_x^{2-}$, x = 8, 6, 4, 2) and 'lithium polysulfide ($Li_2S_x$ or $LiS_x^-$, wherein x = 8, 6, 4, 2)'.

As used herein, the term 'composite' means a material including a combination of two or more materials and realizing more effective functions, while forming physically/chemically different phases.

As used herein, the term 'porosity' means a ratio of volume occupied by pores based on the total volume of a structure, is expressed by the unit of %, and may be used interchangeably with the terms, such as pore ratio, porous degree, or the like.

According to the present disclosure, 'particle diameter $D_n$ (n = 10, 50 or 90)' means a particle size on the basis of n% (n = 10, 50 or 90) in the volume cumulative particle size distribution of a particle powder to be analyzed. The particle diameter, $D_n$ (n = 10, 50 or 90), may be determined by using a laser diffraction method. For example, $D_n$ (n = 10, 50 or 90) may be determined by dispersing a powder to be analyzed in a dispersion medium, introducing the resultant dispersion to a commercially available laser diffraction particle size analyzer (e.g. Microtrac S3500), irradiating ultrasonic waves of about 28 kHz at an output of 60 W to obtain a graph of volume cumulative particle size distribution, and then determining the particle size corresponding to n% (n = 10, 50 or 90) of the cumulative volume.

The present disclosure relates to a positive electrode active material for an electrochemical device and a positive electrode including the same. According to the present disclosure, the electrochemical device includes any device which carries out electrochemical reaction, and particular examples thereof include all types of primary batteries, secondary batteries, fuel cells, solar cells or capacitors, such as super capacitor devices. Particularly, the electrochemical device may be a secondary battery, and the secondary battery may be a lithium-ion secondary battery. For example, the lithium-ion secondary battery may be a lithium-metal battery, a lithium-sulfur battery, an all-solid-state battery, a lithium polymer battery, or the like, a lithium-sulfur battery being preferred.

According to the present disclosure, the positive electrode active material includes a sulfur-carbon composite, which includes a porous carbonaceous material, wherein the porous carbonaceous material has a specific range of BET specific surface area and particle size.

Lithium-sulfur batteries have high discharge capacity and theoretical energy density among various secondary batteries, as well as abundant reserves and low price of sulfur used as a positive electrode active material can reduce the manufacturing cost of the batteries. In addition, such lithium-sulfur batteries have been spotlighted as next-generation secondary batteries by virtue of their eco-friendly advantages.

Since sulfur as a positive electrode active material in a lithium-sulfur battery is a non-conductor, a sulfur-carbon composite formed into a composite with a conductive carbonaceous material has been used generally in order to supplement low electrical conductivity.

However, in the case of a conventional sulfur-carbon composite, lithium polysulfide formed during the electrochemical oxidation/reduction of a lithium-sulfur battery is eluted to an electrolyte to cause a loss of sulfur, resulting in a rapid drop in content of sulfur participating in the electrochemical reaction. As a result, it is not possible to realize the theoretical discharge capacity and theoretical energy density totally in the actual operation. In addition, sulfur undergoes volumetric swelling to about 80%, while being converted into lithium sulfide ($Li_2S$) upon the complete discharge, and thus the pore volume of a positive electrode is reduced, thereby making it difficult to be in contact with an electrolyte. Moreover, lithium polysulfide cannot be reduced completely due to a shuttle phenomenon of reciprocating between a positive electrode and a negative electrode, but undergoes a circular reaction of consuming electrons to cause degradation of charge/discharge efficiency and life undesirably.

To solve this, there have been suggested some methods according to the related art. For example, such methods include increasing the loading amount of sulfur, using a different type of carbonaceous material or mixing process, introducing a coating layer for inhibiting elution of lithium polysulfide, or the like. However, such methods are disadvantageous in that they cannot effectively improve the performance of a lithium-sulfur battery, may cause a severe problem in the stability of the battery, or are not efficient in terms of processes.

Under these circumstances, the present disclosure provides a positive electrode including a sulfur-carbon composite containing a porous carbonaceous material having a BET specific surface area and particle diameter controlled to specific ranges in order to improve the electrochemical reactivity, stability and electrical conductivity of a sulfur-carbon composite and to ensure an effect of improving the capacity and life characteristics of a lithium-sulfur battery including the sulfur-carbon composite.

Particularly, the positive electrode active material according to the present disclosure includes a sulfur-carbon composite, wherein the sulfur-carbon composite includes a porous carbonaceous material and sulfur, sulfur is supported in the pores of the porous carbonaceous material, and the carbonaceous material has a BET specific surface area of larger than 1,600 $m^2/g$ and a particle diameter ($D_{50}$) of primary particles of equal to or larger than 500 nm, preferably equal to or larger than 1 $\mu$m, and less than 8 $\mu$m.

The carbonaceous material functions as a support providing a framework with which sulfur can be fixed uniformly and stably, and supplements the low electrical conductivity of sulfur to facilitate electrochemical reactions. Particularly, since a sulfur-carbon composite includes a carbonaceous material functioning as a support of sulfur, and the carbonaceous material has a large BET specific surface area and an adequate extent of particle diameter ($D_{50}$), it has a low irreversible capacity and high energy density, while showing a high sulfur loading amount. In other words, the sulfur-carbon composite has a structure capable of enhancing the utilization of sulfur during an electrochemical reaction.

According to the related art, use of a carbonaceous material having a high specific surface area has been suggested in order to increase the sulfur loading amount and to improve the reactivity. However, there was no clear understanding about the relationship between the particle diameter of the carbonaceous material and the utilization of sulfur, and thus it was difficult to realize a high-capacity lithium-sulfur battery.

Under these circumstance, according to the present disclosure, the BET specific surface area and particle diameter ($D_{50}$) of the carbonaceous material as a support of sulfur are controlled to specific ranges to disperse sulfur homogeneously inside of and on the external surface of the carbonaceous material and to reduce the irreversible capacity, thereby enhancing the electrochemical reactivity of sulfur. In addition, since the carbonaceous material is used, the electrochemical reactivity, stability and electrical conductivity of the sulfur-carbon composite are improved, resulting in improvement of the capacity and life characteristics of a lithium-sulfur battery. In addition, even when a loss of sulfur or a change in volume occurs during charge/discharge, it is possible to realize optimized charge/discharge performance.

In the sulfur-carbon composite according to the present disclosure, the carbonaceous material used as a support of sulfur may be prepared generally by carbonizing various carbonaceous precursors.

Such a carbonaceous material may include a plurality of irregular pores on the surface and inside thereof. The carbonaceous material may have a BET specific surface area of larger than 1,600 $m^2$/g. Preferably, the specific surface area may be 2,000 $m^2$/g or more, or 2,500 $m^2$/g or more. Meanwhile, the carbonaceous material may have a particle diameter ($D_{50}$) of primary particles of equal to or larger than 500 nm and less than 8 $\mu$m, preferably equal to or larger than 1 $\mu$m and less than 8 $\mu$m. When the particle diameter ($D_{50}$) of primary particles is larger than 8 $\mu$m, it is difficult for lithium ions to migrate due to a limitation in mass transfer, and thus sulfur positioned at the center of carbon cannot be utilized efficiently. When the particle diameter ($D_{50}$) of primary particles is less than 500 nm, there are problems in that fine impurities may be adsorbed with ease, and a large amount of solvent is required for preparing an electrode slurry, thereby making it difficult to increase the solid content, and the ratio of irreversible capacity is increased after the operation of a battery.

Meanwhile, according to an embodiment of the present disclosure, the pores of the carbonaceous material may have a diameter of 0.5-10 nm based on the largest diameter. Meanwhile, the carbonaceous material may preferably have a ratio of pores having a diameter of less than 3 nm of 40 vol% or more, based on 100 vol% of the total pores, in terms of fine and homogeneous dispersion and supporting of non-conductive sulfur and effective use thereof.

The carbonaceous material may have a spherical, rod-like, needle-like, sheet-like, tubular or bulky shape, and any carbonaceous material may be used with no particular limitation, as long as it is one used conventionally for a lithium-sulfur secondary battery.

The carbonaceous material may be any carbonaceous material having porous property and conductivity, as long as it is one used conventionally in the art. Particularly, the carbonaceous material may include at least one selected from the group consisting of graphite; graphene; carbon black, such as denka black, acetylene black, ketjen black, channel black, furnace black, lamp black, thermal black, or the like; carbon nanotubes (CNTs), such as single-walled carbon nanotubes (SWCNTs), multi-walled carbon nanotubes (MWCNTs), or the like; carbon fibers, such as graphite nanofibers (GNFs), carbon nanofibers (CNFs), activated carbon fibers (ACFs), or the like; graphite, such as natural graphite, artificial graphite, expanded graphite, or the like; carbon nanoribbons; carbon nanobelts, carbon nanorods and activated carbon.

According to an embodiment of the present disclosure, the carbonaceous material has a particle size distribution of primary particles corresponding to a Span value of 2.0 or less. Herein, Span refers to the width of a particle size distribution calculated through $D_{10}$, $D_{50}$ and $D_{90}$ values, and is determined by the following Formula 1:

$$\text{Span} = (\text{Particle diameter } (D_{90}) \text{ of primary particles} - \text{Particle diameter } (D_{10}) \text{ of primary particles}) / \text{Particle diameter } (D_{50}) \text{ of primary particles} \qquad \text{[Formula 1]}$$

When the particles have a broad particle size distribution, a large Span value is obtained. When the particles have a narrow particle size distribution, a small Span value is obtained. Therefore, it is possible to understand the distribution of particle sizes through the Span value. When the particle size distribution satisfies a Span value of 2.0 or less, it can be seen that the particle size distribution is uniform, and thus incorporation of excessively large or small particles may be inhibited. In addition, it is possible to inhibit the electrode materials from being broken or the electrode from swelling during charge/discharge cycles by virtue of such a uniform particle size distribution. As a result, it is possible to ensure the stability of the electrode and to improve the performance of the battery.

According to an embodiment of the present disclosure, the carbonaceous material may include activated carbon in an amount of 95 wt% or more, preferably 99 wt% or more, based on 100 wt% of the carbonaceous material. For example, the carbonaceous material may include activated carbon alone.

As described above, the carbonaceous material has a BET specific surface area of larger than 1,600 m$^2$/g, and a particle diameter (D$_{50}$) of primary particles of equal to or larger than 500 nm and less than 8 $\mu$m, or equal to or larger than 1 $\mu$m and less than 8 $\mu$m. When the carbonaceous material dose not satisfy the above-defined ranges, problems may arise in forming a structure capable of increasing the utilization of sulfur in the electrode.

According to the present disclosure, the sulfur-carbon composite includes sulfur. Since sulfur itself has no electrical conductivity, it is formed into a composite with the above-mentioned carbonaceous material to be used as a positive electrode active material.

Herein, sulfur may be at least one selected from the group consisting of inorganic sulfur (S$_8$), Li$_2$S$_n$ (n $\geq$ 1), 2,5-dimercapto-1,3,4-thiadiazole, disulfide compound, such as 1,3,5-trithiocyanuic acid, organic sulfur compound and carbon-sulfur polymer ((C$_2$S$_x$)$_n$, x = 2.5-50, n $\geq$ 2). Preferably, sulfur may include inorganic sulfur (S$_8$).

According to an embodiment of the present disclosure, the positive electrode active material may include the above-described sulfur-carbon composite in an amount of 50 wt% or more, 70 wt% or more, 90 wt% or more, or 95 wt% or more. According to an embodiment of the present disclosure, the positive electrode active material may include the sulfur-carbon composite alone.

According to the present disclosure, the content of sulfur in the sulfur-carbon composite shows a SCP value of larger than 0.85, as defined by the following Formula 2:

[Formula 2]

$$\text{SCP} = \text{Sulfur content ratio (A)} \div \text{Pore volume ratio of carbonaceous material (B)}$$

In Formula 2, A represents a ratio of the weight of sulfur based on the weight of the carbon-sulfur composite (weight of sulfur/weight of sulfur-carbon composite), and B represents a ratio of pore volume in the carbonaceous material (volume of pores in carbonaceous material/apparent volume) based on the total volume (apparent volume, volume of carbon alone + volume of pores) of the carbonaceous material. In addition, there is no unit of SCP.

According to an embodiment of the present disclosure, carbon has a true density of 2.0 g/cm$^3$ (except the pore volume in the carbonaceous material), and has a unit volume of 0.5 (cm$^3$/g).

Herein, the SCP value means a content of sulfur that may be used reversibly in the carbonaceous material having a specific pore structure.

When the SCP value of the sulfur-carbon composite satisfies the above-defined range, there is an advantage in that sulfur may be used effectively and efficiently. Particularly, when the sulfur-carbon composite in a lithium-sulfur battery including the sulfur-carbon composite satisfies the above-defined range of SCP value, the cell of the lithium-sulfur battery may have high energy density.

When the content of sulfur is larger than the above-defined range, sulfur or sulfur compound that is not bound to the carbonaceous material may be aggregated or eluted again toward the surface of the porous carbonaceous material, and thus may hardly accept electrons and may not participate in the electrochemical reaction, resulting in a loss of the capacity of a battery.

In the sulfur-carbon composite according to the present disclosure, sulfur may be positioned inside of the pores of the carbonaceous material and on at least one outer surface of the carbonaceous material, wherein sulfur may be present in a region corresponding to less than 100%, preferably 1-95%, more preferably 60-90%, of the whole of the inner part and outer surface of the carbonaceous material. When sulfur is present on the surface of the carbonaceous material within the above-defined range, it is possible to realize the highest effect in terms of electron transfer area and wettability with an electrolyte. Particularly, within the above-defined range, the surface of the carbonaceous material is impregnated uniformly and thinly with sulfur. Therefore, it is possible to increase the electron transfer contact area during charge/-discharge cycles. When sulfur is positioned on the whole surface of the carbonaceous material at a ratio of 100%, the carbonaceous material is totally covered with sulfur to cause degradation of wettability with an electrolyte and contactability with a conductive material contained in an electrode, and thus cannot accept electrons and cannot participate in the reaction.

The sulfur-carbon composite may be formed through simple mixing of sulfur with the carbonaceous material, or may be a coated composite having a core-shell structure or a supported composite. The coated composite having a core-shell structure is formed by coating one of sulfur and the carbonaceous material with the other of them. For example, the surface of the carbonaceous material may be surrounded with sulfur, or vice versa. In addition, the supported composite may be formed by packing sulfur inside of the carbonaceous material or in the pores of the carbonaceous material. According to the present disclosure, any type of the sulfur-carbon composite may be used with no particular limitation, as long as it satisfies the above-defined weight ratio of a sulfur-based compound to a carbonaceous material.

In still another aspect of the present disclosure, there is provided a method for preparing the sulfur-carbon composite.

The method for preparing a sulfur-carbon composite according to the present disclosure is not particularly limited and may be any method generally known to those skilled in the art. For example, the sulfur-carbon composite may be obtained by a method of forming a composite, including the steps of: (S1) mixing a carbonaceous material with sulfur; and (S2) forming the resultant mixture into a composite.

The mixing in step (S1) is intended to increase the miscibility of sulfur with the carbonaceous material, and may be carried out by using an agitator, such as a mechanical milling device, used conventionally in the art. Herein, the mixing time and rate may be controlled selectively according to the content and condition of the ingredients.

The method for forming a composite in step (S2) is not particularly limited, and any method used conventionally in the art may be used. For example, methods used conventionally in the art, such as a dry composite formation or a wet composite formation (e.g. spray coating), may be used. For example, the mixture of sulfur with the carbonaceous material obtained after the mixing is pulverized through ball milling and is allowed to stand in an oven at 120-160°C for 20 minutes to 1 hour so that molten sulfur may be coated uniformly inside and on the external surface of the carbonaceous material.

Since the sulfur-carbon composite obtained by the above-described method has a structure capable of providing a larger specific surface area, high sulfur loading amount and improved utilization of sulfur, it is possible to improve not only the electrochemical reactivity of sulfur but also the accessability and contactability of an electrolyte, and thus to improve the capacity and life characteristics of a battery.

In still another aspect of the present disclosure, there is provided a positive electrode including the sulfur-carbon composite. The positive electrode includes: a positive electrode current collector; and a positive electrode active material layer formed on at least one surface of the positive electrode current collector, wherein the positive electrode active material layer includes a positive electrode active material, a conductive material and a binder resin. The positive electrode active material layer may include the positive electrode active material in an amount of 70 wt% or more, preferably 85 wt% or more, based on 100 wt% of the positive electrode active material layer.

According to the present disclosure, the positive electrode active material includes the above-described sulfur-carbon composite. The positive electrode active material may include the sulfur-carbon composite in an amount of 70 wt% or more, preferably 80 wt% or more, and more preferably 90 wt% or more, based on 100 wt% of the positive electrode active material. According to an embodiment of the present disclosure, the positive electrode active material may include the sulfur-carbon composite alone. In addition, the positive electrode active material may further include at least one additive selected from transition metal elements, Group IIIA elements, Group IVA elements, sulfur compounds of those elements and alloys of sulfur with those elements, besides the sulfur-carbon composite.

According to an embodiment of the present disclosure, the positive electrode active material layer may include a lithium transition metal composite oxide represented by the following Chemical Formula 1:

$$[\text{Chemical Formula 1}] \qquad Li_aNi_bCo_cM^1_dM^2_eO_2$$

wherein $M^1$ represents Mn, Al or a combination thereof, and preferably may be Mn, or Mn and Al; and $M^2$ represents at least one selected from the group consisting of Zr, W, Y, Ba, Ca, Ti, Mg, Ta and Nb, preferably may be at least one selected from the group consisting of Zr, Y, Mg and Ti, and more preferably may be Zr, Y or a combination thereof. The element, $M^2$, is not essentially contained, but may function to accelerate grain growth during firing or to improve the crystal structure stability, when being contained in a suitable amount.

Meanwhile, the positive electrode current collector may include various positive electrode current collectors used in the art. Particular examples of the positive electrode current collector include stainless steel, aluminum, nickel, titanium, baked carbon, or aluminum or stainless steel surface-treated with carbon, nickel, titanium, silver, or the like. In general, the positive electrode current collector may have a thickness of 3-500 $\mu$m. In addition, the positive electrode current collector may have fine surface irregularities formed on the surface thereof to increase the adhesion of a positive electrode active material. For example, the positive electrode current collector may have various shapes, such as a film, a sheet, a foil, a net, a porous body, a foam or non-woven web body, or the like.

The conductive material is an ingredient for imparting conductivity to an electrode, and any material may be used with no particular limitation, as long as it has electron conductivity, while not causing any chemical change in the corresponding battery. Particular examples of the conductive material include: graphite, such as natural graphite or artificial graphite; carbonaceous material, such as carbon black, acetylene black, ketjen black, channel black, furnace black, lamp black, thermal black, carbon fibers, carbon nanotubes, or the like; metal powder or metal fibers, such as copper, nickel, aluminum, silver, or the like; conductive whisker, such as zinc oxide or potassium titanate; conductive metal oxide, such as titanium oxide; and conductive polymers, such as polyphenylene derivatives, and such conductive materials may be used alone or in combination. In general, the conductive material may be used in an amount of 1-30 wt%, preferably 1-20 wt%, and more preferably 1-10 wt%, based on the total weight of the positive electrode active material layer.

The binder is an ingredient functioning to improve the adhesion among the positive electrode active material particles and the adhesion between the positive electrode active material and the positive electrode current collector. Particular examples of the binder include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated EPDM, styrene-butadiene rubber (SBR), fluoro-rubber, various copolymers, or the like, and such binders may be used alone or in combination. The binder may be used in an amount of 1-30 wt%, preferably 1-20 wt%, and more preferably 1-10 wt%, based on the total weight of the positive electrode active material layer.

The positive electrode may be obtained by a conventional method known to those skilled in the art.

According to an embodiment of the present disclosure, the positive electrode may be obtained as follows. First, the binder is dissolved in a solvent for preparing a slurry, and then the conductive material is dispersed therein. The solvent for preparing a slurry may be one capable of dispersing the positive electrode active material, the binder and the conductive material homogeneously and evaporating with ease, preferably. Typical examples of the solvent include acetonitrile, methanol, ethanol, tetrahydrofuran, water, isopropyl alcohol, or the like. Then, the positive electrode active material is dispersed homogeneously in the solvent containing the conductive material dispersed therein, optionally together with additives, thereby preparing a positive electrode slurry. The content of each of the solvent, positive electrode active material or optionally used additives is not significant in the present disclosure, and such ingredients may be used to provide a viscosity sufficient to facilitate coating of the slurry.

The prepared slurry is applied to a current collector and vacuum dried to form a positive electrode. The slurry may be coated on the current collector to an adequate thickness depending on the slurry viscosity and the thickness of a positive electrode to be formed.

The slurry may be coated by using a method generally known to those skilled in the art. For example, the positive electrode active material slurry is distributed on the top surface of one side of the positive electrode current collector and may be dispersed uniformly by using a doctor blade, or the like. In addition to this, the positive electrode active material slurry may be coated by using a die casting, comma coating, screen printing process, or the like.

The slurry may be dried in a vacuum oven at 50-200°C for 1 day or less, but is not limited thereto.

In still another aspect of the present disclosure, there is provided a lithium-sulfur battery including an electrode assembly that includes the positive electrode including the above-described sulfur-carbon composite, and an electrolyte. The electrode assembly includes a positive electrode, a negative electrode and a separator interposed between the positive electrode and the negative electrode.

For example, the electrode assembly may have a stacked or stacked/folded structure formed by stacking a negative electrode and a positive electrode with a separator interposed therebetween, or may have a jelly-roll structure formed by winding the stack. In addition, when forming a jelly-roll structure, a separator may be further disposed at the outside to prevent the negative electrode and the positive electrode from being in contact with each other.

The negative electrode may include a negative electrode current collector; and a negative electrode active material layer formed on at least one surface of the negative electrode current collector, wherein the negative electrode active material layer includes a negative electrode active material, a conductive material and a binder.

Hereinafter, the negative electrode will be explained in more detail.

The negative electrode may have a structure including a negative electrode active material layer formed on one surface or both surfaces of an elongated sheet-like negative electrode current collector, wherein the negative electrode active material layer may include a negative electrode active material, a conductive material and a binder.

Particularly, the negative electrode may be obtained by applying a negative electrode slurry, prepared by dispersing a negative electrode active material, a conductive material and a binder in a solvent, such as dimethyl sulfoxide (DMSO), isopropyl alcohol, N-methyl pyrrolidone (NMP), acetone or water, to one surface or both surfaces of a negative electrode current collector, and removing the solvent of the negative electrode slurry through a drying process, followed by pressing. Meanwhile, when applying the negative electrode slurry, the negative electrode slurry may not be applied to a partial region of the negative electrode current collector, for example one end of the negative electrode current collector, to obtain a negative electrode including a non-coated portion.

The negative electrode active material may include a material capable of reversible lithium-ion (Li$^+$) intercalation/deintercalation, a material capable of reacting with lithium ions to form a lithiated compound reversibly, lithium metal or lithium alloy. For example, the material capable of reversible lithium-ion intercalation/deintercalation may include crystalline carbon, amorphous carbon or a mixture thereof, and particular examples thereof may include artificial graphite, natural graphite, graphitized carbon fibers, amorphous carbon, soft carbon, hard carbon, or the like, but are not limited thereto. Particular examples of the material capable of reacting with lithium ions reversibly to form a lithiated compound may include tin oxide, titanium nitrate or a silicon-based compound. Particular example of the lithium alloy may include alloys of lithium (Li) with a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be lithium metal, particularly lithium metal foil or lithium metal powder. The silicon-based negative electrode active material may include Si, Si-Me alloy (wherein Me is at least one selected from the group consisting of Al, Sn, Mg, Cu, Fe, Pb, Zn, Mn, Cr, Ti and Ni), $SiO_y$ (wherein $0 < y < 2$), Si-C composite or a combination thereof, preferably $SiO_y$ (wherein $0 < y < 2$). Since the silicon-based negative electrode active material has a high theoretical capacity, use of such a silicon-based negative electrode active material can improve capacity characteristics.

The negative electrode current collector may include a negative electrode current collector used generally in the art. Particular examples of the negative electrode current collector include copper, stainless steel, aluminum, nickel, titanium, baked carbon, copper or stainless steel surface-treated with carbon, nickel, titanium, silver, aluminum-cadmium alloy, or the like. In general, the negative electrode current collector may have a thickness of 3-500 $\mu$m. In addition, similarly to the positive electrode current collector, the negative electrode current collector may have fine surface irregularities formed on the surface thereof to increase the binding force with the negative electrode active material. For example, the negative electrode current collector may have various shapes, such as a film, a sheet, a foil, a net, a porous body, a foam or non-woven web body, or the like.

The conductive material is an ingredient for imparting conductivity to the negative electrode, and any material may be used with no particular limitation, as long as it has electron conductivity, while not causing any chemical change in the corresponding battery. Particular examples of the conductive material include: graphite, such as natural graphite or artificial graphite; carbonaceous material, such as carbon black, acetylene black, ketjen black, channel black, furnace black, lamp black, thermal black, carbon fibers, carbon nanotubes, or the like; metal powder or metal fibers, such as copper, nickel, aluminum, silver, or the like; conductive whisker, such as zinc oxide or potassium titanate; conductive metal oxide, such as titanium oxide; and conductive polymers, such as polyphenylene derivatives, and such conductive materials may be used alone or in combination. In general, the conductive material may be used in an amount of 1-30 wt%, preferably 1-20 wt%, and more preferably 1-10 wt%, based on the total weight of the negative electrode active material layer.

The binder is an ingredient functioning to improve the adhesion among the negative electrode active material particles and the adhesion between the negative electrode active material and the negative electrode current collector. Particular examples of the binder include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated EPDM, styrene-butadiene rubber (SBR), fluoro-rubber, various copolymers, or the like, and such binders may be used alone or in combination. The binder may be used in an amount of 1-30 wt%, preferably 1-20 wt%, and more preferably 1-10 wt%, based on the total weight of the negative electrode active material layer.

Meanwhile, the electrode assembly further includes a separator, which is disposed in the electrode assembly by interposing it between the negative electrode and the positive electrode. The separator functions to separate the negative electrode and the positive electrode from each other and to provide a lithium-ion channel, and any separator may be used with no particular limitation, as long as it is one used generally for a lithium secondary battery. Particular examples of the separator include a porous polymer film, such as a porous polymer film made of ethylene homopolymer, propylene homopolymer, ethylene/butene copolymer, ethylene/butene copolymer, ethylene/hexene copolymer, ethylene/methacrylate copolymer, or the like, or a laminated structure of two or more layers of such porous polymer films. In addition, a conventional porous non-woven web, such as a non-woven web made of high-melting point glass fibers, polyethylene terephthalate fibers, or the like, may be used. Further, in order to ensure heat resistance or mechanical strength, a coated separator containing a ceramic ingredient or a polymer material may be used.

In still another aspect of the present disclosure, there is provided an electrochemical device including the electrode assembly. In the electrochemical device, the electrode assembly is received in a battery casing together with an electrolyte. The battery casing may be any suitable battery casing, such as a pouch type or metallic can type battery casing, used conventionally in the art with no particular limitation.

The electrolyte used according to the present disclosure may include various electrolytes that may be used for a lithium secondary battery. Particular examples of the electrolyte may include, but are not limited to: an organic liquid electrolyte, an inorganic liquid electrolyte, a solid polymer electrolyte, a gel-like polymer electrolyte, a solid inorganic electrolyte, a molten type inorganic electrolyte, or the like.

Particularly, the electrolyte may include an organic solvent and a lithium salt.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, $\gamma$-butyrolactone and $\varepsilon$-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bond, an aromatic ring or ether bond); amide-based solvents, such as dimethyl formamide; dioxolane-based solvents, such as 1,3-dioxolan; sulforane-based solvents, or the like.

Meanwhile, according to an embodiment of the present disclosure, the non-aqueous solvent of the electrolyte preferably includes an ether-based solvent with a view to enhancing the charge/discharge performance of a battery. Particular examples of such an ether-based solvent include a cyclic ether (e.g. 1,3-dioxolane, tetrahydrofuran, tetrohydropyran, or the like), a linear ether compound (e.g., 1,2-dimethoxyethane), a low-viscosity fluorinated ether, such as 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, or 1H,1H,2'H-perfluorodipropyl ether, and such non-aqueous solvents may be used alone or in combination.

The lithium salt is not particularly limited, as long as it is a compound capable of providing lithium ions used in a lithium-ion secondary battery. Particular examples of the lithium salt include, but are not limited to: $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. Such lithium salts may be used alone or in combination. For example, the lithium salt may be present in the electrolyte at a concentration of 0.1-3.0 M. When the concentration of the lithium salt falls within the above-defined range, the electrolyte has suitable conductivity and viscosity and shows excellent electrolyte quality, and thus lithium ions can be transported effectively.

Additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as difluoroethylene carbonate; pyridine; triethyl phosphite; triethanolamine; cyclic ethers; ethylene diamine; n-glyme; triamide hexamethyl phosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-10 wt%, preferably 0.1-5 wt%, based on the total weight of the electrolyte.

There is no particular limitation in the shape of the lithium-sulfur battery. For example, the lithium-sulfur battery may have various shapes, including a cylindrical shape, a stacked shape, a coin-like shape, or the like.

In yet another aspect of the present disclosure, there is provided a battery module which includes the lithium-sulfur battery as a unit cell. The battery module may be used as a power source of middle- to large-scale devices requiring high-temperature stability, long cycle characteristics, high capacity characteristics, or the like.

Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Preparation Example**

[Preparation of Sulfur-Carbon Composite]

Activated carbon was mixed homogeneously with sulfur ($S_8$) at the weight ratio as shown in the following Table 1, and the resultant mixture was pulverized through ball milling and allowed to stand in an oven at 155°C for 30 minutes to obtain a sulfur-carbon composite.

In Table 1, SCP is a value calculated according to the above Formula 2.

[Manufacture of Battery]

First, 90 wt% of the sulfur-carbon composite obtained as described above, as a positive electrode active material, and 5 wt% of denka black as a conductive material and 5 wt% of styrene butadiene rubber/carboxymethyl cellulose (weight ratio of SBR:CMC = 7:3) as a binder were introduced to a solvent and mixed therein to prepare a positive electrode slurry composition.

The resultant positive electrode slurry composition was applied to an aluminum current collector (thickness: 20 μm) to a thickness of 350 μm and dried at 50°C for 12 hours, and then pressing was carried out by using a roll press to obtain a positive electrode.

Lithium metal foil having a thickness of 35 µm was used as a negative electrode together with the positive electrode. In addition, as an electrolyte, a mixed solution containing 1 M lithium bis(trifluoromethanesulfonyl)imide (LiTFSI) and 1 wt% of lithium nitrate ($LiNO_3$) dissolved in an organic solvent including 1,3-dioxolane and dimethyl ether (volume ratio of DOL:DME = 1:1) was used.

Particularly, the positive electrode and the negative electrode were disposed in such a manner that they might face each other, polyethylene having a thickness of 20 µm and a porosity of 45 vol% was interposed between both electrodes as a separator, and then 70 µL of the electrolyte prepared as mentioned above was injected thereto to obtain a lithium-sulfur battery.

[Table 1]

| | BET specific surface area of activated carbon | Sulfur (wt%) | Carbonaceous material (wt%) | Diameter of primary particles ($D_{50}$) (µm) | Span | SCP | Ratio of irreversible capacity |
|---|---|---|---|---|---|---|---|
| Ex. 1 | 3,000 m²/g | 70 | 30 | 4 µm | 1.9 | Larger than 0.9 | 3.53% |
| Ex. 2 | 3,000 m²/g | 70 | 30 | 3 µm | 1.52 | Larger than 0.9 | 3.68% |
| Ex. 3 | 3,000 m²/g | 75 | 25 | 2 µm | 1.3 | Larger than 0.9 | 3.65% |
| Comp. Ex. 1 | 3,000 m²/g | 75 | 25 | 8 µm | 2.1 | Larger than 0.9 | 12.27% |
| Comp. Ex. 2 | 3,000 m²/g | 70 | 30 | 8 µm | 2.05 | 0.88 | 4.87% |
| Comp. Ex. 3 | 1,600 m²/g | 75 | 25 | Less than 1 µm | 2.1 | 0.89 | 5.63% |
| Comp. Ex. 4 | 1,500 m²/g | 70 | 30 | 100 nm or less | 2.5 | 0.81 | 8.83% |
| Comp. Ex. 5 | 1,500 m²/g | 70 | 30 | 100 nm or less | 4.6 | 0.79 | 6.35% |
| Comp. Ex. 6 | 300 m²/g | 70 | 30 | Larger than 10 µm | 2.2 | 0.84 | 10.73% |
| Comp. Ex. 7 | 3,000 m²/g | 70 | 30 | 3 µm | 2.17 | Larger than 0.9 | 5.47% |

As can be seen from Table 1, Examples 1-3 use a carbonaceous material having a BET specific surface area of 3,000 m²/g and a diameter of primary particles of less than 8 µm. As a result, Examples 1-3 provide a significantly low ratio of irreversible capacity of less than 4%. On the contrary, Comparative Examples 1 and 2 use a carbonaceous material having a high BET specific surface area but a large (8 µm) diameter of primary particles, and thus provide a higher ratio of irreversible capacity as compared to Examples. Meanwhile, it is shown that when using a carbonaceous material having a low specific surface area of 1,600 m²/g or less, in the case of Comparative Examples 3, 4 and 5 using a carbonaceous material having a small particle diameter and Comparative Example 6 using a carbonaceous material having an excessively larger particle diameter, the ratio of irreversible capacity is increased as compared to Examples. In addition, as can be seen from Table 1, Examples 1-3 use a carbonaceous material, the primary particles of which have a Span value of 2 or less. As a result, Examples 1-3 provide a significantly low ratio of irreversible capacity of less than 4%. On the contrary, it is shown that Comparative Examples 1-7 using a carbonaceous material, the primary particles of which have a Span value of larger than 2, provide a higher ratio of irreversible capacity as compared to Examples 1-3. Particularly, it is shown that Comparative Examples 4, 5 and 7 using a carbonaceous material having an SCP value of 0.85 or less provide a more increased ratio of irreversible capacity.

**Test Example 1: Evaluation of Physical Properties of Carbonaceous Materials**

The specific surface area, total pore volume and average pore diameter of the carbonaceous materials used in Preparation Example were determined. Particularly, the carbonaceous material used in each preparation example was determined for nitrogen adsorption and desorption under vacuum by using a specific surface area analyzer (model name: BELSORP-MINI, available from BEL Japan Inc.). Then, an adsorption/desorption curve was obtained therefrom, and the specific surface area based on the Brunaure-Emmett-Teller (BET) method was calculated.

**Test Example 2: Method for Determining Particle Diameter**

The particle diameter corresponding to $D_{50}$ was determined by using a particle size analyzer (model name: Bluewave, available from Microtrac) through a dry process. In the case of a carbonaceous material forming secondary particles through aggregation, primary particle diameter was observed and determined by using an electron scanning microscope (model name: SEM, available from JEOL).

**Test Example 3: Method for Determining Irreversible Capacity**

A battery charger (available from PNE) was used and each battery was charged/discharged at a constant temperature condition of 25°C in a voltage range of 1.0-3.6 V at 0.1 C/0.1 C rate. Then, the irreversible capacity was determined according to the following mathematical formula.

Ratio of irreversible capacity = [Discharge capacity at 1st cycle (0.1 C rate) - Discharge capacity at 2nd cycle (0.1 C rate)] ÷ Discharge capacity at 1st cycle (0.1 C rate) x 100 (%)

**Claims**

1. A positive electrode for a lithium-sulfur battery, which comprises a positive electrode active material comprising a sulfur-carbon composite, wherein the sulfur-carbon composite comprises a porous carbonaceous material and sulfur, and the carbonaceous material has a specific surface area (BET) of larger than 1,600 m²/g measured as set forth in the description and a particle diameter ($D_{50}$) of primary particles of equal to or larger than 500 nm and less than 8 $\mu$m measured as set forth in the description;
   wherein the carbonaceous material has a Span value of 2.0 or less, as determined by the following Formula 1:

   Span = (Particle diameter ($D_{90}$) of primary particles measured as set forth in the description - Particle diameter ($D_{10}$) of primary particles measured as set forth in the description) / Particle diameter ($D_{50}$) of primary particles measured as set forth in the description.    [Formula 1]

2. The positive electrode for a lithium-sulfur battery according to claim 1, wherein the carbonaceous material has the particle diameter ($D_{50}$) of primary particles of equal to or larger than 1 $\mu$m and less than 8 $\mu$m measured as set forth in the description.

3. The positive electrode for a lithium-sulfur battery according to claim 1, wherein the carbonaceous material has a BET specific surface area of primary particles of 2,000 m²/g or more measured as set forth in the description.

4. The positive electrode for a lithium-sulfur battery according to claim 1, wherein the carbonaceous material has a ratio of pores having a diameter of less than 3 nm of 40 vol% or more based on 100 vol% of the total pores measured as set forth in the description.

5. The positive electrode for a lithium-sulfur battery according to claim 1, wherein the sulfur-carbon composite has a SCP value of larger than 0.85, as defined by the following Formula 2:

   SCP = Sulfur content ratio (A) ÷ Pore volume ratio of carbonaceous material (B) measured as set forth in the description    [Formula 2]

   In Formula 2, A represents a ratio of the weight of sulfur based on the weight of the carbon-sulfur composite, and B represents a ratio of pore volume in the carbonaceous material based on the total volume (apparent volume) of the carbonaceous material.

6. The positive electrode for a lithium-sulfur battery according to claim 1, wherein the carbonaceous material comprises activated carbon in an amount of 95 wt% or more based on 100 wt% of the carbonaceous material.

7. The positive electrode for a lithium-sulfur battery according to claim 1, wherein the positive electrode active material comprises the sulfur-carbon composite in an amount of 70 wt% or more based on 100 wt% of the positive electrode active material.

8. The positive electrode for a lithium-sulfur battery according to claim 1, wherein the sulfur-carbon composite is at least one of a composite formed through simple mixing of sulfur with the carbonaceous material, a coated composite having a core-shell structure, and a composite including sulfur packed in the internal pores of the carbonaceous material.

9. The positive electrode for a lithium-sulfur battery according to claim 1, wherein the positive electrode active material further comprises a binder resin and a conductive material.

10. A lithium-sulfur battery comprising a positive electrode, a negative electrode, a separator interposed between the positive electrode and the negative electrode, and an electrolyte, wherein the electrolyte comprises at least one selected from a cyclic ether, a linear ether and a fluorinated ether, and the positive electrode is the same as defined in claim 1.

**Patentansprüche**

1. Positive Elektrode für eine Lithium-Schwefel-Batterie, die ein aktives Material der positiven Elektrode umfasst, das einen Schwefel-Kohlenstoff-Verbundstoff umfasst, wobei der Schwefel-Kohlenstoff-Verbundstoff ein poröses kohlenstoffhaltiges Material und Schwefel umfasst und das kohlenstoffhaltige Material eine spezifische Oberfläche (BET) von größer als 1.600 $m^2$/g, gemessen wie in der Beschreibung dargelegt, und einen Partikeldurchmesser ($D_{50}$) von Primärpartikeln von gleich oder größer als 500 nm und weniger als 8 $\mu$m, gemessen wie in der Beschreibung dargelegt, aufweist;
wobei das kohlenstoffhaltige Material einen Span-Wert von 2,0 oder weniger aufweist, wie durch die folgende Formel 1 bestimmt:

Span = (Partikeldurchmesser ($D_{90}$) von Primärpartikeln, gemessen wie in der Beschreibung dargelegt - Partikeldurchmesser ($D_{10}$) von Primärpartikeln, gemessen wie in der Beschreibung dargelegt) [Formel 1] / Partikeldurchmesser ($D_{50}$) von Primärpartikeln, gemessen wie in der Beschreibung dargelegt.

2. Positive Elektrode für eine Lithium-Schwefel-Batterie nach Anspruch 1, wobei das kohlenstoffhaltige Material den Partikeldurchmesser ($D_{50}$) von Primärpartikeln von gleich oder größer als 1 $\mu$m und weniger als 8 $\mu$m, gemessen wie in der Beschreibung dargelegt, aufweist.

3. Positive Elektrode für eine Lithium-Schwefel-Batterie nach Anspruch 1, wobei das kohlenstoffhaltige Material eine spezifische BET-Oberfläche von Primärpartikeln von 2.000 $m^2$/g oder mehr, gemessen wie in der Beschreibung dargelegt, aufweist.

4. Positive Elektrode für eine Lithium-Schwefel-Batterie nach Anspruch 1, wobei das kohlenstoffhaltige Material einen Anteil von Poren mit einem Durchmesser von weniger als 3 nm von 40 Vol.-% oder mehr, bezogen auf 100 Vol.-% der gesamten Poren, gemessen wie in der Beschreibung dargelegt, aufweist.

5. Positive Elektrode für eine Lithium-Schwefel-Batterie nach Anspruch 1, wobei der Schwefel-Kohlenstoff-Verbundstoff einen SCP-Wert von größer als 0,85, wie durch die folgende Formel 2 definiert, aufweist:

[Formel 2] SCP = Schwefelgehaltsverhältnis (A) ÷ Porenvolumenverhältnis von kohlenstoffhaltigem Material (B), gemessen wie in der Beschreibung dargelegt, [Formel 2]

wobei in Formel 2 A ein Verhältnis des Gewichts von Schwefel, bezogen auf das Gewicht des Kohlenstoff-Schwefel-Verbundstoffs, darstellt und B ein Verhältnis des Porenvolumens in dem kohlenstoffhaltigen Material, bezogen auf das Gesamtvolumen (scheinbares Volumen) des kohlenstoffhaltigen Materials, darstellt.

6. Positive Elektrode für eine Lithium-Schwefel-Batterie nach Anspruch 1, wobei das kohlenstoffhaltige Material Aktivkohle in einer Menge von 95 Gew.-% oder mehr, bezogen auf 100 Gew.-% des kohlenstoffhaltigen Materials, umfasst.

7. Positive Elektrode für eine Lithium-Schwefel-Batterie nach Anspruch 1, wobei das aktive Material der positiven Elektrode den Schwefel-Kohlenstoff-Verbundstoff in einer Menge von 70 Gew.-% oder mehr, bezogen auf 100 Gew.-% des aktiven Materials der positiven Elektrode, umfasst.

8. Positive Elektrode für eine Lithium-Schwefel-Batterie nach Anspruch 1, wobei der Schwefel-Kohlenstoff-Verbundstoff mindestens einer von einem Verbundstoff, der durch einfaches Mischen von Schwefel mit dem kohlenstoffhaltigen Material gebildet ist, einem beschichteten Verbundstoff mit einer Kern-Schale-Struktur und einem Verbundstoff, der Schwefel, der in den inneren Poren des kohlenstoffhaltigen Materials gepackt ist, umfasst, ist.

9. Positive Elektrode für eine Lithium-Schwefel-Batterie nach Anspruch 1, wobei das aktive Material der positiven Elektrode ferner ein Bindemittelharz und ein leitfähiges Material umfasst.

10. Lithium-Schwefel-Batterie, umfassend eine positive Elektrode, eine negative Elektrode, einen Separator, der zwischen der positiven Elektrode und der negativen Elektrode angeordnet ist, und einen Elektrolyten, wobei der Elektrolyt mindestens einen, ausgewählt aus einem cyclischen Ether, einem linearen Ether und einem fluorierten Ether, umfasst und die positive Elektrode die gleiche wie in Anspruch 1 definiert ist.

**Revendications**

1. Électrode positive pour une batterie au lithium-soufre, comprenant une matière active d'électrode positive comprenant un composite soufre-carbone, le composite soufre-carbone comprenant une matière carbonée poreuse et du soufre, et la matière carbonée possédant une superficie spécifique (BET) supérieure à 1 600 m²/g, mesurée de la façon énoncée dans la description, et un diamètre particulaire ($D_{50}$) de particules primaires égal ou supérieur à 500 nm, et inférieur à 8 $\mu$m, mesuré de la façon énoncée dans la description ;
la matière carbonée ayant une valeur Span de 2,0 ou moins, de la façon déterminée avec la formule 1 suivante :

Span = (Diamètre particulaire ($D_{90}$) de particules primaires mesurées de la façon énoncée dans la description - Diamètre particulaire ($D_{10}$) de particules primaires mesurées de la façon énoncée dans la description) / Diamètre particulaire ($D_{50}$) de particules primaires mesurées de la façon énoncée dans la description.               [Formule 1]

2. Électrode positive pour une batterie au lithium-soufre selon la revendication 1, le diamètre particulaire ($D_{50}$) de particules primaires de la matière carbonée étant égal ou supérieur à 1 $\mu$m et inférieur à 8 $\mu$m, mesuré de la façon énoncée dans la description.

3. Électrode positive pour une batterie lithium-soufre selon la revendication 1, la matière carbonée présentant une superficie spécifique BET des particules primaires de 2000 m²/g $\mu$m ou davantage, mesurée de la façon énoncée dans la description.

4. Électrode positive pour une batterie au lithium-soufre selon la revendication 1, le ratio de pores au diamètre inférieur à 3 nm de la matière carbonée étant 40% en volume, ou supérieur, sur la base de 100% en volume du total des pores, mesuré de la façon énoncée dans la description.

5. L'électrode positive pour une batterie au lithium-soufre selon la revendication 1, la valeur SCP du composite soufre-carbone étant supérieure à 0,85, de la façon définie par la formule 2 suivante :

SCP = Ratio de teneur en soufre (A) ÷ Ratio de volume de pores de la matière carbonée (B), mesuré de la façon énoncée dans la description [Formule 2]

Dans la formule 2, A représente un ratio du poids du soufre en fonction du poids du composite carbone-soufre, et B représente un ratio du volume des pores dans la matière carbonée d'après le volume total (volume apparent) de la matière carbonée.

6. Électrode positive pour une batterie au lithium-soufre selon la revendication 1, la matière carbonée comprenant du charbon actif dans la quantité de 95 % en poids, ou davantage, sur la base de 100 % en poids de matière carbonée.

7. Électrode positive pour une batterie au lithium-soufre selon la revendication 1, la matière active de l'électrode positive comprenant du composite soufre-carbone dans la proportion de 70 % en poids, ou davantage, sur la base de 100 % en poids de matière active de l'électrode positive.

8. Électrode positive pour une batterie au lithium-soufre selon la revendication 1, le composite soufre-carbone étant au moins un d'un composite réalisé par un simple mélange de soufre et de matière carbonée, d'un composite revêtu possédant une structure noyau-enveloppe, et d'un composite incluant du soufre tassé dans les pores internes de la matière carbonée.

9. Électrode positive pour une batterie au lithium-soufre selon la revendication 1, la matière active de l'électrode positive comprenant en outre une résine liante et un matériau conducteur.

10. Batterie au lithium-soufre comprenant une électrode positive, une électrode négative, un séparateur intercalé entre l'électrode positive et l'électrode négative, et un électrolyte, où l'électrolyte comprenant au moins un éther sélectionné parmi un éther cyclique, un éther linéaire et un éther fluoré, et l'électrode positive étant la même que celle qui est définie dans la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210147385
- KR 20200060258 A
- KR 20200030218 A
- KR 20210032637 A